# EUROPEAN PATENT APPLICATION

(11) **EP 4 737 288 A1**
(43) Date of publication of application: **06.05.2026**
(21) Application number: 25211744.5
(22) Date of filing: 28.10.2025
(51) Int. Cl.: B62K 5/05, B62K 5/08, B62K 5/10, B62K 7/04

(54) **LEAN VEHICLE**

(30) Priority: 31.10.2024 JP 2024191734
(71) Applicant: KAWASAKI MOTORS, LTD., Akashi-shi, Hyogo 673-8666 (JP)
(72) Inventor: NAGAO, Koki, Akashi-shi, Hyogo, 6738666 (JP); ISHII, Hiroshi, Akashi-shi, Hyogo, 6738666 (JP); NARUMI, Tadashi, Akashi-shi, Hyogo, 6738666 (JP); INABA, Taichi, Akashi-shi, Hyogo, 6738666 (JP)
(74) Representative: Wenzel Nemetzade Warthmüller Patentanwälte Part mbB

(57) **Abstract**

A rod coupling 45 of a lean vehicle is disposed radially apart from a second steering axis L2 and is angularly displaced about the second steering axis L2 integrally with a steering shaft. A left rod 51 is link-coupled to the rod coupling 45 and a left front wheel, and angularly displaces the left front wheel about a left front wheel pivot axis in accordance with an angular displacement of the steering shaft 43. The same applies to a right side. The left front wheel pivot axis and a right front wheel pivot axis are both inclined to extend upward toward a rear side. A rod arrangement plane S1 is a horizontal plane extending along a horizontal direction, or is an inclined plane that is inclined to extend upward toward the rear side.

## Description

### Technical Field

The present application relates to a lean vehicle configured to travel in a lean state relative to a road surface.

### Background Art

Patent Literature 1 is Japanese Patent No. 7413181.

In the lean vehicle of Patent Literature 1, as a steering drive arm rotates, left and right tie rods push and pull left and right front wheels to change steering angles of the left and right front wheels.

### Summary of Invention

In the lean vehicle of Patent Literature 1, a steering drive arm is inclined downward toward a rear side from a steering transmission shaft in a side view. In this type of layout, a force that counteracts a restoring force by a self-steering torque is likely to be generated for reasons described later. As a result, running stability at a low speed or at a start of travel is reduced.

The present application has been made in view of the above circumstances, and a main object thereof is to provide a configuration that facilitates enhancement of running stability at a low speed or at a start of travel in a lean vehicle configured to travel in a lean state relative to a road surface.

### Solution to Problem

Problems to be solved by the present application are as described above. Hereinafter, solutions to the problems and advantageous effects thereof will be described.

According to a first aspect of the present invention, a lean vehicle configured as follows is provided. That is, the lean vehicle is configured to travel in a lean state relative to a road surface. The lean vehicle comprises a seat, a body frame, a parallel link mechanism, a left front wheel, a right front wheel, a steering shaft, a rod coupling, a left rod, and a right rod. A driver is seated on the seat. The body frame includes a seat post that supports the seat and extends in an up-down direction. The parallel link mechanism is link-coupled to the body frame, and includes a left arm, a right arm, an upper arm, and a lower arm. The parallel link mechanism forms a parallel link in a front view of the vehicle. When the vehicle is in an upright state, the left arm and the right arm extend parallel to the seat post. The left front wheel is supported by the left arm to be angularly displaceable about a left front wheel pivot axis of the left arm. The right front wheel is supported by the right arm to be angularly displaceable about a right front wheel pivot axis of the right arm. The steering shaft is supported by the body frame and is angularly displaced about a steering axis in response to a steering force from the driver. The rod coupling is disposed radially apart from the steering axis and is angularly displaced about the steering axis integrally with the steering shaft. The left rod is link-coupled to the rod coupling and the left front wheel, and angularly displaces the left front wheel about the left front wheel pivot axis in accordance with an angular displacement of the steering shaft. The right rod is link-coupled to the rod coupling and the right front wheel, and angularly displaces the right front wheel about the right front wheel pivot axis in accordance with the angular displacement of the steering shaft. The left front wheel pivot axis and the right front wheel pivot axis are both inclined to extend upward toward a rear side. An axis of the left rod and an axis of the right rod extend parallel to either the upper arm or the lower arm, or are inclined to extend upward toward a vehicle-widthwise inner side in an upright state of the vehicle.

According to a second aspect of the present invention, a lean vehicle configured as follows is provided. That is, the lean vehicle is configured to travel in a lean state relative to a road surface. The lean vehicle comprises a seat, a body frame, a parallel link mechanism, a left front wheel, a right front wheel, a steering shaft, a rod coupling, a left rod, and a right rod. A driver is seated on the seat. The body frame includes a seat post that supports the seat and extends in an up-down direction. The parallel link mechanism is link-coupled to the body frame, and includes a left arm, a right arm, an upper arm, and a lower arm, the left arm and the right arm extending parallel to the seat post. The left front wheel is supported by the left arm to be angularly displaceable about a left front wheel pivot axis of the left arm. The right front wheel is supported by the right arm to be angularly displaceable about a right front wheel pivot axis of the right arm. The steering shaft is supported by the body frame and is angularly displaced about a steering axis in response to a steering force from the driver. The rod coupling is disposed radially apart from the steering axis and is angularly displaced about the steering axis integrally with the steering shaft. The left rod is link-coupled to the rod coupling and the left front wheel, and angularly displaces the left front wheel about the left front wheel pivot axis in accordance with an angular displacement of the steering shaft. The right rod is link-coupled to the rod coupling and the right front wheel, and angularly displaces the right front wheel about the right front wheel pivot axis in accordance with the angular displacement of the steering shaft. The left front wheel pivot axis and the right front wheel pivot axis are both inclined to extend upward toward a rear side. A rod arrangement plane, which is a virtual plane that overlaps the rod coupling and through which an axis of the left rod and an axis of the right rod pass, is an inclined plane that is inclined to extend upward toward the rear side in an upright state of the vehicle.

### Advantageous Effect of Invention

According to the present application, it is possible to provide a configuration that facilitates enhancement of running stability at a low speed or at a start of travel in a lean vehicle configured to travel in a lean state relative to a road surface.

### Brief Description of Drawings

[FIG. 1] A side view of a lean vehicle according to a first embodiment.
[FIG. 2] A front view of the lean vehicle in an upright state.
[FIG. 3] A front view of the lean vehicle in a lean state.
[FIG. 4] A perspective view of a vicinity of a parallel link mechanism and a steering shaft.
[FIG. 5] A side view of the vicinity of the parallel link mechanism and the steering shaft.
[FIG. 6] A side view of a vicinity of a parallel link mechanism and a steering shaft of a comparative example.
[FIG. 7] A schematic diagram of the parallel link mechanism and a steering mechanism of the comparative example as viewed obliquely from a rear upper side.
[FIG. 8] A schematic diagram of the parallel link mechanism and the steering mechanism of the comparative example as viewed in a direction of a second steering axis.
[FIG. 9] A schematic diagram of the parallel link mechanism and a steering mechanism of the first embodiment as viewed obliquely from a rear upper side.
[FIG. 10] A schematic diagram of the parallel link mechanism and the steering mechanism of the first embodiment as viewed in a direction of a second steering axis.
[FIG. 11] A side view of a vicinity of a parallel link mechanism and a steering shaft of a second embodiment.

### Description of Embodiments

Hereinafter, a first embodiment of the present application will be described with reference to the drawings. In the following description, respective directions of a lean vehicle 1 are defined by directions as viewed from a driver riding on the lean vehicle 1 that is in an upright state on a horizontal plane. Accordingly, a front-rear direction corresponds to a vehicle length direction, and a left-right direction corresponds to a vehicle width direction. A vertical direction and an up-down direction correspond to a height direction. In the present specification, terms such as "parallel," "vertical," and "coincident" include not only a state in which the meanings of these terms are strictly satisfied, but also a state in which they are substantially satisfied (in other words, a state in which a slight difference exists). Unless otherwise specified, it is assumed that the lean vehicle 1 is in an upright state without leaning and a steering is in a neutral state, that is, in a straight-ahead state.

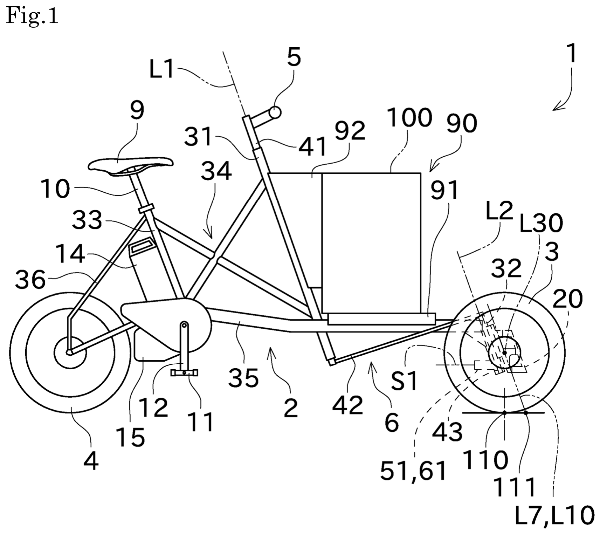

A lean vehicle 1 shown in FIG. 1 is a lean vehicle that is inclined relative to a road surface when turning, for example. The lean vehicle 1 is a saddle-ride type vehicle on which a driver rides astride. The lean vehicle 1 travels by using a force applied by the driver to pedals and a force generated by a motor. Specifically, since the lean vehicle 1 of the present embodiment is an electrically power-assisted bicycle, the motor generates a force on condition that the driver applies a force to the pedals.

The lean vehicle 1 is not limited to an electrically power-assisted bicycle. For example, the lean vehicle 1 may be an electric bicycle that is not of an assist type. In this case, the lean vehicle 1 can travel by the motor generating power even when the driver is not applying force to the pedals. The lean vehicle 1 may be an electric vehicle. In this case, pedals can be omitted from the lean vehicle 1, and footrests or the like may be provided instead of the pedals. The lean vehicle 1 may be a non-electric bicycle. In this case, a motor and a battery are omitted from the lean vehicle 1.

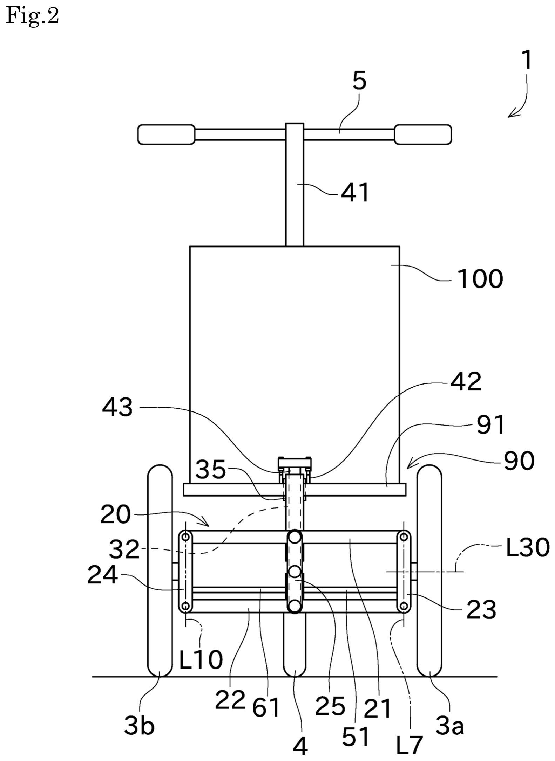

As shown in FIGS. 1 and 2, the lean vehicle 1 comprises a body frame 2, a left front wheel 3a, a right front wheel 3b, and a rear wheel 4.

The body frame 2 is a member that serves as a skeleton of the lean vehicle 1. Various components included in the lean vehicle 1 are attached to the body frame 2. The body frame 2 is configured by combining a plurality of frames to ensure necessary rigidity. Details of the body frame 2 will be described later.

The left front wheel 3a, the right front wheel 3b, and the rear wheel 4 each comprise a wheel body and a tire attached to the wheel body. The left front wheel 3a is disposed on a left side with respect to a vehicle width center position. The right front wheel 3b is disposed on a right side with respect to the vehicle width center position. The left front wheel 3a and the right front wheel 3b are supported by the body frame 2 via a parallel link mechanism 20. Hereinafter, the left front wheel 3a and the right front wheel 3b may be collectively referred to as front wheels 3. The lean vehicle 1 of the present embodiment is a three-wheeled bicycle including two front wheels 3 and one rear wheel 4.

As shown in FIG. 2, the parallel link mechanism 20 comprises an upper arm 21, a lower arm 22, a left arm 23, a right arm 24, and a center arm 25. The arms constituting the parallel link mechanism 20 are coupled to form a quadrangle. The coupled arms are relatively rotatable about axes parallel to the front-rear direction at respective coupling positions. The upper arm 21 and the lower arm 22 are arranged vertically side by side. The left arm 23 and the right arm 24 are arranged horizontally side by side. The center arm 25 couples a central portion of the upper arm 21 and a central portion of the lower arm 22 to be relatively rotatable about an axis parallel to the front-rear direction.

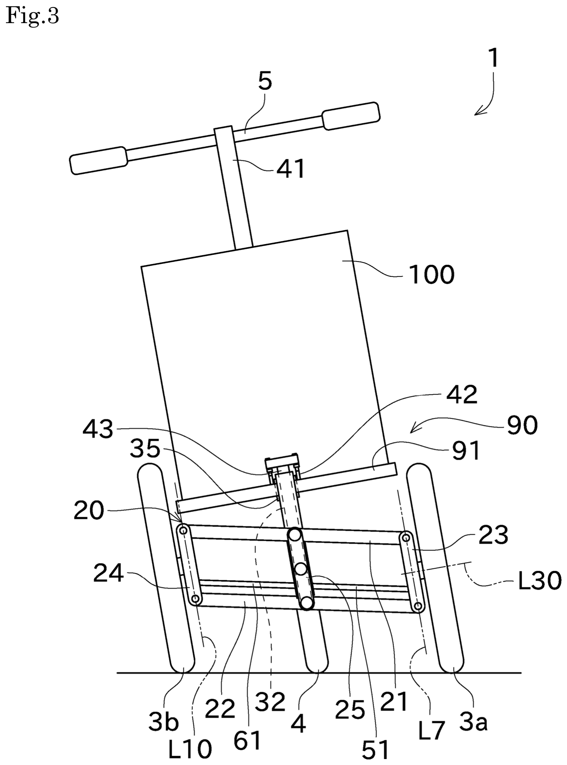

As shown in FIG. 2, in a state where the lean vehicle 1 is upright on a horizontal plane, a longitudinal direction of the upper arm 21 and the lower arm 22 is parallel to the horizontal plane. In the state where the lean vehicle 1 is upright on the horizontal plane, a longitudinal direction of the left arm 23 and the right arm 24 is parallel to the up-down direction. Therefore, the parallel link mechanism 20 forms a rectangle. On the other hand, as shown in FIG. 3, in a state where the lean vehicle 1 is leaning on the horizontal plane, the longitudinal direction of the upper arm 21 and the lower arm 22 is substantially parallel to the horizontal plane. Note that when a height of a coupling position between the left front wheel 3a and the left arm 23 and a height of a coupling position between the right front wheel 3b and the right arm 24 are different, the longitudinal direction of the upper arm 21 and the lower arm 22 may be inclined from the horizontal plane accordingly. In the state where the lean vehicle 1 is leaning on the horizontal plane, the longitudinal direction of the left arm 23 and the right arm 24 is inclined with respect to the up-down direction. In other words, the longitudinal direction of the left arm 23 and the right arm 24 is parallel to a longitudinal direction of the left front wheel 3a and the right front wheel 3b in a front view. The longitudinal direction of the left arm 23 and the right arm 24 is parallel to a longitudinal direction of the center arm 25. By using the parallel link mechanism 20, the body frame 2 can be inclined relative to the road surface while the left front wheel 3a and the right front wheel 3b are respectively inclined relative to the road surface. Note that the center arm 25 is not an essential component and can be omitted.

The front wheels 3 are steering wheels, and a steering angle of the front wheels 3 changes in response to a steering operation by the driver. The lean vehicle 1 comprises a steering handlebar 5 for steering. When the driver angularly displaces the steering handlebar 5 about a first steering axis L1, the force is transmitted to the front wheels 3 via a steering mechanism 6, which will be described later. As a result, the steering angle of the front wheels 3 changes.

Behind the steering handlebar 5, a seat 9 on which the driver is seated is provided. The seat 9 is connected to a seat post 10. The seat post 10 is attached to the body frame 2. The seat post 10 is disposed to be inclined such that an upper end thereof is located behind a lower end thereof.

Below the seat 9, pedals 11 are provided. The pedals 11 are disposed as a left and right pair. The driver is seated on the seat 9, grips the steering handlebar 5 with hands for steering, and pedals the pedals 11 with feet to make the lean vehicle 1 travel.

A crank 12 is connected to the pedals 11. The crank 12 is angularly displaceable about a crankshaft. A rotational force generated by pedaling the pedals 11 to angularly displace the crank 12 is transmitted to the rear wheel 4, which is a drive wheel, via a drive chain.

A battery 14 and a motor 15 are provided in a range between the front wheels 3 and the rear wheel 4 in the front-rear direction, specifically, in a range behind an axial position of the front wheels 3 and in front of an axial position of the rear wheel 4.

The battery 14 stores electric power. The battery 14 is configured by, for example, combining small cylindrical lithium-ion rechargeable batteries. Note that the battery 14 is not limited to a lithium-ion rechargeable battery, and other types of rechargeable batteries such as a nickel-metal hydride battery may be used. The battery 14 is not limited to a configuration combining a plurality of rechargeable batteries. For example, a single rechargeable battery having a shape according to a requirement may be manufactured and used as the battery 14.

The battery 14 is fixed to the body frame 2 via a battery holder. In addition, by attaching the battery 14 to the battery holder, terminals of the battery 14 are electrically connected to a conductor of the battery holder. The conductor of the battery holder is connected to the motor 15 via an electric wire or the like passing through an inside or an outside of the body frame 2. This allows electric power to be supplied from the battery 14 to the motor 15.

The motor 15 is fixed to the body frame 2 by using a fastener such as a bolt. The motor 15 has a motor body and a motor driver. When a drive current is supplied from the motor driver to the motor body, the motor body generates power.

The force generated by the motor 15 is transmitted to a motor sprocket via a reduction gear. A chain is engaged with the motor sprocket. This allows the rear wheel 4 to be driven by using the power generated by the motor 15.

Next, the body frame 2 will be described.

As shown in FIG. 1, the body frame 2 comprises a first head pipe 31, a second head pipe 32, a seat tube 33, a reinforcing frame 34, a lower frame 35, and a rear frame 36.

The first head pipe 31 and the second head pipe 32 are linear and cylindrical members. The first head pipe 31 is located behind the front wheels 3 in the front-rear direction. Members for transmitting a steering force, which will be described later, are inserted into the first head pipe 31 and the second head pipe 32. The head pipes 31 and 32 are fixed to the body frame 2 that constitutes the vehicle. Specifically, the first head pipe 31 is fixed to the reinforcing frame 34 and the lower frame 35.

The seat tube 33 is located in a range between the front wheels 3 and the rear wheel 4 in the front-rear direction, and in a range between the left front wheel 3a and the right front wheel 3b in the left-right direction. The seat post 10 is inserted into the seat tube 33. The seat tube 33 is a linear and cylindrical member.

The reinforcing frame 34 is a frame located in a range including between the first head pipe 31 and the seat tube 33 in the front-rear direction. The lean vehicle 1 of the present embodiment comprises a plurality of reinforcing frames 34. However, the lean vehicle 1 may comprise a single reinforcing frame 34, or the reinforcing frame 34 may be omitted if sufficient rigidity is ensured. The reinforcing frame 34 may be connected to the first head pipe 31 and the seat tube 33, or may be connected to another member.

The lower frame 35 is a frame that serves as a base of the lean vehicle 1. The lower frame 35 is a linear member having a rectangular cross section. The lower frame 35 is disposed below a center of the lean vehicle 1 in the up-down direction. More specifically, the lower frame 35 is disposed in a range including a position lower than an upper end portion of the front wheels 3. The lower frame 35 has a shape extending in the front-rear direction. A front end portion of the lower frame 35 is located at a position overlapping the front wheels 3 in the front-rear direction. The above-described second head pipe 32 is connected to the front end portion of the lower frame 35. The front end portion of the lower frame 35 supports the front wheels 3 via the second head pipe 32 and the parallel link mechanism 20. A rear end portion of the lower frame 35 is connected to a lower end portion of the seat tube 33, a member that supports the crankshaft, or a member that supports the motor 15.

The lower frame 35 of the present embodiment corresponds to a load support frame. In particular, a portion of the lower frame 35 that is in front of the first head pipe 31 corresponds to the load support frame. The load support frame is a frame that supports a load 100 as shown in FIG. 1. An accommodation section 90 for placing the load 100 is attached to the load support frame. The accommodation section 90 comprises a placement member 91 that supports the load 100, and a holding member 92 for stabilizing a posture of the load 100. Note that the accommodation section 90 may be a basket. The lower frame 35 being the load support frame is an example. For example, a frame provided at a position higher than the upper end portion of the front wheels may be the load support frame.

The rear frame 36 is a frame located in a range including behind the seat tube 33 in the front-rear direction. One rear frame 36 is provided in an upper position, and another is provided in a lower position.

The above-described body frame 2 is an example, and the shape of each member, the presence or absence of each frame, the number of each frame, or the function of each frame can be changed.

Next, the steering mechanism 6 will be described. In the following description, terms such as "connection," "coupling," and "attachment" include not only a state in which two members are directly connected or the like, but also a state in which they are indirectly connected or the like via another member. The expression "be inclined upward toward a rear side" means to be inclined to extend upward toward a rear side, in other words, an upper end of a target member is located behind a lower end of the target member. The expression "be inclined downward toward a rear side" is interpreted in the same manner.

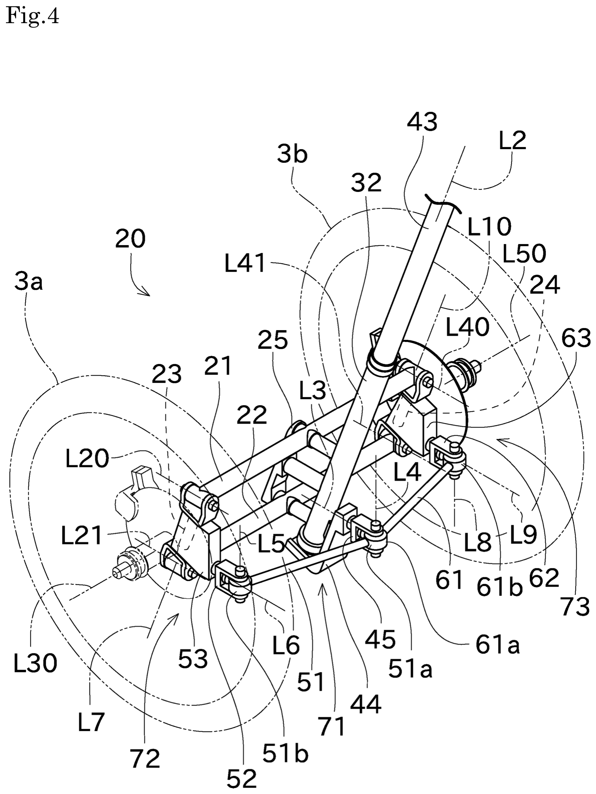

As shown in FIG. 1, the steering mechanism 6 comprises a handlebar shaft 41, a transmission arm 42, and a steering shaft 43. Further, as shown in FIG. 4, the steering mechanism 6 comprises an L-shaped member 44, a rod coupling 45, a left rod 51, a left coupling part 52, a left knuckle member 53, a right rod 61, a right coupling part 62, and a right knuckle member 63. A coupling structure from the L-shaped member 44 to the left rod 51 and the right rod 61 is referred to as a central coupling structure 71, a coupling structure from the left rod 51 to the left front wheel 3a is referred to as a left coupling structure 72, and a coupling structure from the right rod 61 to the right front wheel is referred to as a right coupling structure 73.

The handlebar shaft 41 is connected to the steering handlebar 5. The handlebar shaft 41 is inserted into the first head pipe 31. The handlebar shaft 41 is inclined upward toward a rear side. The handlebar shaft 41 is located behind the front wheels 3 in the front-rear direction. When the driver angularly displaces the steering handlebar 5, the handlebar shaft 41 connected to the steering handlebar 5 is angularly displaced about a first steering axis L1. The first steering axis L1 is inclined upward toward a rear side. The steering shaft 43 is angularly displaced about a second steering axis L2, which will be described later. The second steering axis L2 extends parallel to the first steering axis L1. Hereinafter, a force applied by the driver to the steering handlebar 5 is referred to as a steering force. A rear end of the transmission arm 42 is angularly displaceably coupled to a lower end of the handlebar shaft 41. A front end of the transmission arm 42 is angularly displaceably coupled to an upper end of the steering shaft 43.

The transmission arm 42 transmits the steering force received from the handlebar shaft 41. The rear end of the transmission arm 42 is link-coupled to the lower end of the handlebar shaft 41 at a position laterally spaced from the first steering axis L1 on one side in a vehicle width direction. In the present embodiment, the transmission arm 42 and the handlebar shaft 41 are coupled at a coupling portion to be relatively rotatable about an axis parallel to the first steering axis L1. The front end of the transmission arm 42 is link-coupled to the upper end of the steering shaft 43 at a position laterally spaced from the second steering axis L2 on one side in the vehicle width direction. In the present embodiment, the transmission arm 42 and the steering shaft 43 are coupled at a coupling portion to be relatively rotatable about an axis parallel to the second steering axis L2. Specifically, a pair of left and right transmission arms 42 are provided, and in accordance with an angular displacement of the handlebar shaft 41, one transmission arm 42 moves forward and the other transmission arm 42 moves backward. The steering shaft 43 is angularly displaceably coupled to the front end of the transmission arm 42. This allows the transmission arm 42 to transmit the steering force to the steering shaft 43.

The steering shaft 43 transmits the steering force received from the transmission arm 42. The steering shaft 43 is inserted into the second head pipe 32. An upper end portion of the steering shaft 43 extends upward from an upper end of the second head pipe 32 and is exposed from the second head pipe 32. A lower end portion of the steering shaft 43 extends downward from a lower end of the second head pipe 32 and is exposed from the second head pipe 32. The above-described parallel link mechanism 20 is located in front of the steering shaft 43. An inclination angle of the steering shaft 43 is the same as an inclination angle of the handlebar shaft 41. The steering shaft 43 is disposed at a position overlapping the front wheels 3 in the front-rear direction. When the steering force is transmitted, the steering shaft 43 is angularly displaced about the second steering axis L2. The second steering axis L2 is inclined upward toward a rear side. The L-shaped member 44 is coupled to a lower end of the steering shaft 43.

As described above, in the present embodiment, the steering force is transmitted in the order of the handlebar shaft 41, the transmission arm 42, and the steering shaft 43. Alternatively, the handlebar shaft 41 and the steering shaft 43 may be integrated. In this case, the steering force of the driver is directly transmitted to the steering shaft 43.

The L-shaped member 44 has a first piece and a second piece that intersect each other, and a connecting part that connects the first piece and the second piece. The first piece and the second piece are spaced apart in the up-down direction. The first piece of the L-shaped member 44 is fixed to the lower end of the steering shaft 43 exposed from the second head pipe 32. The connecting part is fixed to the first piece at a position radially apart from the second steering axis L2. Specifically, the connecting part is fixed to the first piece at a position radially apart from an outer peripheral surface of the second head pipe 32. The connecting part extends in the up-down direction along the second head pipe 32. In the present embodiment, the connecting part extends upward from a coupling portion with the first piece. The connecting part is fixed to the second piece at a position spaced upward from the first piece and radially apart from the outer peripheral surface of the second head pipe 32. In the present embodiment, the second piece is located behind the outer peripheral surface of the second head pipe 32 when the lean vehicle 1 is in a straight-ahead running state. The L-shaped member 44 is angularly displaced about the second steering axis L2 integrally with the steering shaft 43. The rod coupling 45 is coupled to a rear end of the second piece of the L-shaped member 44.

The rod coupling 45 is a U-shaped member. The rod coupling 45 is disposed below the upper arm 21 and above the lower arm 22. In addition, when the lean vehicle 1 is in a straight-ahead state, the rod coupling 45 is located behind the steering shaft 43. However, the position of the rod coupling 45 is an example and can be changed. The rod coupling 45 is angularly displaceable about a central front-rear axis L3 set with respect to the L-shaped member 44. The central front-rear axis L3 intersects the second steering axis L2 and extends parallel to the front-rear direction when the lean vehicle 1 is in a straight-ahead state. The central front-rear axis L3 is angularly displaced about the second steering axis L2 in conjunction with an angular displacement of the L-shaped member 44 about the second steering axis L2. The rod coupling 45 is angularly displaced about the second steering axis L2 integrally with the L-shaped member 44. The left rod 51 and the right rod 61 are coupled to the rod coupling 45. The rod coupling 45 and the left and right rods 51 and 61 are angularly displaced about the central front-rear axis L3 with respect to the L-shaped member 44 in accordance with a lean of the vehicle.

In the present embodiment, in the front-rear positional relationship, the parallel link mechanism 20, the steering shaft 43, and the rod coupling 45 are arranged in this order from the front. The left arm 23 and the right arm 24 are inclined upward toward the rear side along the steering shaft 43 and parallel to the steering shaft 43. In other words, the upper arm 21 is disposed spaced upward and rearward from the lower arm 22. The upper arm 21 is link-coupled to upper end portions of the left and right arms 23 and 24 to be rotatable about an axis parallel to the front-rear direction. The lower arm 22 is link-coupled to lower end portions of the left and right arms 23 and 24 to be rotatable about an axis parallel to the front-rear direction. The left and right rods 51 and 61 respectively extend parallel to the upper and lower arms 21 and 22, and are disposed between the upper and lower arms 21 and 22 in the up-down direction (in other words, above a lower end portion of the lower arm 22) and behind the upper and lower arms 21 and 22. With the above configuration, the left rod 51 and the right rod 61 are likely to be protected from obstacles from the front or below by the parallel link mechanism 20. However, a part of the left and right rods 51 and 61 and the rod coupling 45 may be located below a lower surface of the lower arm 22. Alternatively, a part of the left and right rods 51 and 61 and the rod coupling 45 may be located above an upper surface of the upper arm 21.

In the present embodiment, the left rod 51 and the right rod 61 are coupled to the common rod coupling 45. However, this structure is an example. For example, a pair of left and right rod couplings 45 may be coupled to the L-shaped member 44. In this case, the left rod 51 is coupled to a left rod coupling 45, and the right rod 61 is coupled to a right rod coupling 45. As described above, the left and right rods 51 and 61 extend parallel to a direction in which the upper and lower arms 21 and 22 extend. The left and right rods 51 and 61 extend parallel to a virtual plane including an axis of the lower arm 22 and a lower left rotation axis L21. In the present embodiment, when the lean vehicle 1 is in an upright state, the left and right rods 51 and 61 extend horizontally in the same manner as the respective arms of the parallel link mechanism 20.

The left rod 51 transmits the steering force received from the rod coupling 45, pushes and pulls the left front wheel 3a, and changes a steering angle of the left front wheel 3a. Specifically, the left rod 51 is a rod-shaped member. Of the left rod 51, an end on a side of the rod coupling 45 is referred to as a proximal end 51a, and an end on a side of the left front wheel 3a is referred to as a distal end 51b. In a side view, the distal ends 51b and 61b of the left and right rods 51 and 61 and the rod coupling 45 are located at the same height. The left rod 51 is inclined forward toward a vehicle-widthwise outer side from the proximal end to the distal end. This allows a space to be provided between the left rod 51 and the second head pipe 32. For example, when steered to the right, the left rod 51 can prevent interference with the second head pipe 32, and a steering angle can be increased.

The proximal end 51a is angularly displaceable about a central vertical axis L4 set with respect to the rod coupling 45. The central vertical axis L4 extends parallel to the vertical direction when the lean vehicle 1 is in a straight-ahead and upright state (non-leaning state). In the present embodiment, the rod coupling 45 and the left and right rods 51 and 61 are coupled by a ball joint. Specifically, the proximal end 51a of the left rod 51 is a member used for a ball joint, such as a pillow ball. In this case, the proximal end 51a of the left rod 51 can be bent in any direction with a ball center point as a fulcrum within a predetermined range with respect to the rod coupling 45. Therefore, the proximal end 51a of the left rod is angularly displaceable with respect to the rod coupling 45 not only about the central vertical axis L4 but also about an axis parallel to the front-rear direction and an axis parallel to the left-right direction, for example. In this manner, by increasing degrees of freedom in which a posture of the left rod 51 can be changed with respect to the rod coupling, the posture can be changed by a load from any direction, and a bending load applied to the left rod 51 can be suppressed. Note that the ball joint is not an essential coupling structure and can be omitted.

A coupling structure from the L-shaped member 44 to the left rod 51 is referred to as a central coupling structure 71. The central coupling structure 71 includes a structure in which the left rod 51 is angularly displaceable about the central front-rear axis L3, and a structure in which the left rod 51 is angularly displaceable about the central vertical axis L4.

When the lean vehicle is in a straight-ahead running state, the distal end 51b of the left rod 51 is angularly displaceable about a left vertical axis L5 set with respect to the left coupling part 52. The left vertical axis L5 extends parallel to the vertical direction when the lean vehicle 1 is in a straight-ahead and upright state. In the present embodiment, the left coupling part 52 and the left rod 51 are coupled by a ball joint. Specifically, the distal end 51b of the left rod is a member used for a ball joint, such as a pillow ball. In this case, the distal end 51b of the left rod 51 can be bent in any direction with a ball center point as a fulcrum within a predetermined range with respect to the left coupling part 52. Therefore, the distal end 51b of the left rod 51 is angularly displaceable with respect to the left coupling part 52 not only about the left vertical axis L5 but also about an axis parallel to the front-rear direction and an axis parallel to the left-right direction, for example. In this manner, by increasing degrees of freedom in which a posture of the left rod 51 can be changed with respect to the left coupling part 52, the posture can be changed by a load from any direction, and a bending load applied to the left rod 51 can be suppressed. Note that the ball joint is not an essential coupling structure and can be omitted. As described above, the left rod 51 extends forward toward a left side from the proximal end 51a. Therefore, the left vertical axis L5 is located in front of the central vertical axis L4. In the present embodiment, the left vertical axis L5 extends parallel to the central vertical axis L4 regardless of a leaning state or a steering state.

The left coupling part 52 is a U-shaped member. The left coupling part 52 couples the left rod 51 and the left knuckle member 53. The left knuckle member 53 rotatably supports the left wheel. The left coupling part 52 is angularly displaceable about a left front-rear axis L6 set with respect to the left knuckle member 53. The left front-rear axis L6 intersects the central vertical axis L4 and extends parallel to the front-rear direction when the lean vehicle 1 is in a straight-ahead state. The left front-rear axis L6 is angularly displaced about the second steering axis L2 in conjunction with an angular displacement of the left coupling part 52 about the left vertical axis L5. In the present embodiment, the left front-rear axis L6 extends parallel to the central front-rear axis L3 regardless of a leaning state or a steering state.

The left knuckle member 53 is coupled to the left coupling part 52, and is further coupled to a wheel body of the left front wheel 3a and the left arm 23. The left knuckle member 53 is supported by the left arm 23 to be rotatable about a left front wheel pivot axis L7 set on the left arm 23. The left front wheel pivot axis L7 extends parallel to the second steering axis L2. In the present embodiment, the left front wheel pivot axis L7 corresponds to a central axis of the left arm 23. In the present embodiment, the left knuckle member 53 is supported by the left arm 23 to be rotatable about the left front wheel pivot axis L7 with respect to the left arm 23.
However, the left knuckle member 53 may be fixed to the left arm 23 as long as it is rotatable about the left front wheel pivot axis L7. In this manner, the left front wheel 3a and the left knuckle member 53 are integrally and angularly displaceable about the left front wheel pivot axis L7. As a result, a steering angle of the left front wheel 3a changes. The left front wheel pivot axis L7 is inclined upward toward a rear side. Specifically, as shown in FIG. 1, an extension line of the left front wheel pivot axis L7 intersects the ground in front of a ground contact point 110 of the wheel. The left front wheel 3a is supported by the left knuckle member 53 to be rotatable about a left wheel rotation axis L30 set on the left knuckle member 53. The left wheel rotation axis L30 extends parallel to the front-rear direction when the lean vehicle 1 is in a straight-ahead state. In the present embodiment, the left wheel rotation axis L30 is located at a vertical intermediate position between the upper and lower arms 21 and 22, and intersects the left front wheel pivot axis L7.

The left arm 23 has an upper end portion, a lower end portion, and a connecting portion. The upper end portion of the left arm 23 is coupled to a left end portion of the upper arm 21 to be angularly displaceable about an upper left rotation axis L20 set on the upper arm 21. The lower end portion of the left arm 23 is coupled to a left end portion of the lower arm 22 to be angularly displaceable about a lower left rotation axis L21 set on the lower arm 22. The upper left rotation axis L20 and the lower left rotation axis L21 extend parallel to the front-rear direction. A connecting portion of the left arm 23 connects the upper and lower end portions, extends in the up-down direction, and extends along the above-described left front wheel pivot axis L7. This allows the left arm 23 to be angularly displaceable about the rotation axes L20 and L21 extending in the front-rear direction with respect to the upper and lower arms 21 and 22, while supporting the left knuckle member 53 to be angularly displaceable about the left front wheel pivot axis L7.

A coupling structure from the left rod 51 to the left front wheel 3a is referred to as a left coupling structure 72. The left coupling structure 72 includes a structure in which the left rod 51 is angularly displaceable about the left vertical axis L5, and a structure in which the left rod 51 is angularly displaceable about the left front-rear axis L6.

As described above, in the lean vehicle, the central vertical axis L4 and the left vertical axis L5 are set parallel to each other. In the present embodiment, when the lean vehicle is in an upright state, the central vertical axis L4 and the left vertical axis L5 extend parallel to the vertical direction. In the lean vehicle, the central front-rear axis L3 and the left front-rear axis L6 are set parallel to each other. In the present embodiment, when the lean vehicle 1 is in a straight-ahead running state, the central front-rear axis L3 and the left front-rear axis L6 extend parallel to the front-rear direction and are located in a common virtual plane extending horizontally.

When the lean vehicle is in a straight-ahead running state, the central front-rear axis L3 intersects the second steering axis L2 and the central vertical axis L4, respectively, and extends parallel to the front-rear direction. When the lean vehicle 1 is in a straight-ahead running state, the left front-rear axis L6 intersects the left vertical axis L5 and the left front wheel pivot axis L7, respectively, and extends parallel to the front-rear direction. A length between the second steering axis L2 and the central vertical axis L4 in a direction in which the central front-rear axis L3 extends is set to be equal to a length between the left vertical axis L5 and the left front wheel pivot axis L7 in a direction in which the left front-rear axis L6 extends. In a virtual plane including the central front-rear axis L3 and the left front-rear axis L6, a length between the central vertical axis L4 and the left vertical axis L5 is set to be equal to a length between the second steering axis L2 and the left front wheel pivot axis L7. An angle formed between the second steering axis L2 and the central front-rear axis L3 is set to be equal to an angle formed between the left front wheel pivot axis L7 and the left front-rear axis L6. An angle formed between the second steering axis L2 and the central vertical axis L4 is set to be equal to an angle formed between the left front-rear axis L6 and the left vertical axis L5.

Since the steering mechanism of the present embodiment is symmetrical with respect to the left and right sides, the points described for the left steering mechanism also apply to the right steering mechanism. Therefore, a right rod 61, a proximal end 61a of the right rod 61, a distal end 61b of the right rod 61, a right coupling part 62, a right knuckle member 63, a right vertical axis L8, a right front-rear axis L9, a right front wheel pivot axis L10, a right arm 24, an upper right rotation axis, and a lower right rotation axis also act in the same manner as the left side components.

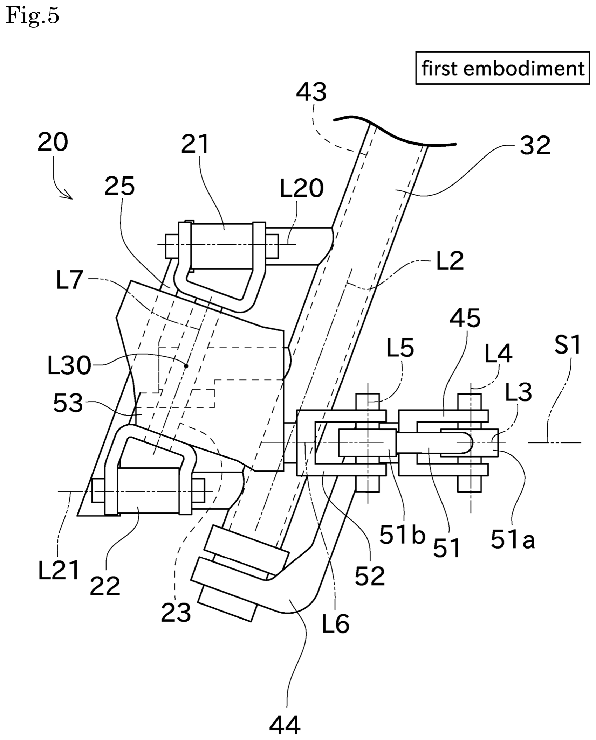

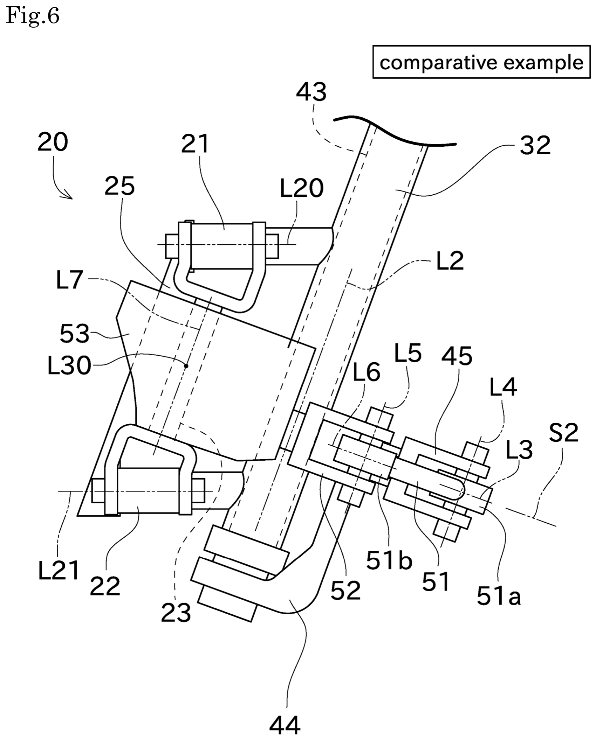

Next, with reference to FIGS. 5 and 6, a layout of the rod coupling 45, the left rod 51, and the right rod 61 will be described, focusing on differences from a comparative example having a layout equivalent to that of Patent Literature 1.

First, a rod arrangement plane S1 of the first embodiment will be described. The description of the rod arrangement plane S1 is based on the premise that the lean vehicle 1 is in an upright state without leaning and a steering is in a neutral state, that is, in a straight-ahead state. The rod arrangement plane S1 is a virtual plane that overlaps the rod coupling 45 and through which an axis of the left rod 51 and an axis of the right rod 61 pass. As shown in FIG. 5, the rod arrangement plane S1 of the first embodiment is a horizontal plane extending along a horizontal direction.

Next, a rod arrangement plane S2 of a comparative example will be described. The comparative example is an example based on the lean vehicle 1 of the first embodiment, adopting the layout of Patent Literature 1 for a mechanism that transmits a steering force from the steering shaft 43 to the front wheels 3. The comparative example will be described using the same names and reference signs as in the first embodiment. As shown in FIG. 6, the comparative example has a layout in which the rod coupling 45 and the like extend in a direction perpendicular to the second steering axis L2. Since the second steering axis L2 is inclined upward toward the rear side as described above, the rod arrangement plane S2 is a plane inclined downward toward the rear side.

In other words, the rod arrangement plane S2 can also be described as a virtual perpendicular plane extending perpendicularly to the second steering axis L2. Further, when comparing the rod arrangement plane S1 and the virtual perpendicular plane, it is assumed that they are arranged to overlap at the second steering axis L2. In front of the second steering axis L2, the rod arrangement plane S1 is located below the virtual perpendicular plane. Behind the second steering axis L2, the rod arrangement plane S1 is located above the virtual perpendicular plane. In other words, the rod arrangement plane S1, which is a virtual plane that overlaps the rod coupling 45 and through which the axis of the left rod 51 and the axis of the right rod 61 pass, is a horizontal plane extending along a horizontal direction, or is an inclined plane that is inclined to extend upward toward the rear side.

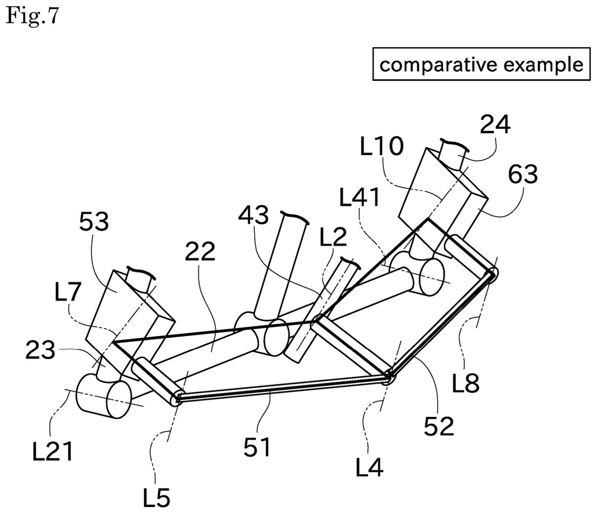

Next, with reference mainly to FIGS. 7 to 10, an effect of a difference in layout between the first embodiment and the comparative example will be described.

First, a force generated when a lean vehicle leans and a behavior of the lean vehicle will be described for all lean vehicles in which the left front wheel pivot axis L7 and the right front wheel pivot axis L10 are inclined upward toward the rear side. When the vehicle leans, a force called self-steer is generated in the direction of the lean. Self-steer is a force that is generated based on a lean behavior of the vehicle, not caused by a handlebar operation by a driver, and that changes a steering angle. Since the self-steer acts in the direction in which the vehicle leans, it is a force that assists the driver's steering. For example, as shown in FIG. 3, the self-steer refers to a force that steers the wheels to turn the vehicle body to the left when the vehicle body is inclined such that a left side of the vehicle body approaches the ground relative to an upright state while maintaining a running state. For example, when the driver changes a posture of the vehicle body by shifting a center of gravity such that the left side of the vehicle body approaches the ground, a force that steers the wheels is generated. This allows the driver to steer the wheels even with a small steering force applied to the steering handlebar 5.

One of the causes of self-steer is a trail effect. A trail is a distance between a ground contact point 110 of the front wheel and an intersection point 111 where the pivot axes L7 and L10 of the left front wheel 3a and the right front wheel 3b intersect the ground. In the present embodiment, because of this distance, a moment is generated in the front wheels when the vehicle is inclined, and self-steer, which is a force that turns the handlebar in the lean direction, is generated. The generation of self-steer makes it easier to change the steering angle of the front wheels, so that a force applied by the driver to the steering handlebar 5 can be reduced. In addition, at a start of travel and at a low speed, an inertial force due to running is small, and an influence of a restoring force that steers the wheels by the self-steer is large. Therefore, in order to prevent the vehicle from falling at the start of travel and at a low speed, it is important not to generate a force that counteracts the self-steer.

Here, in the layout of the comparative example, a force that weakens the self-steer (a force in a direction opposite to the self-steer) is likely to be generated during a turn for reasons described below. Therefore, a force that counteracts the restoring force is generated due to the force that weakens the self-steer. As a result, stability of the vehicle at the start of travel or at a low speed is likely to be reduced.

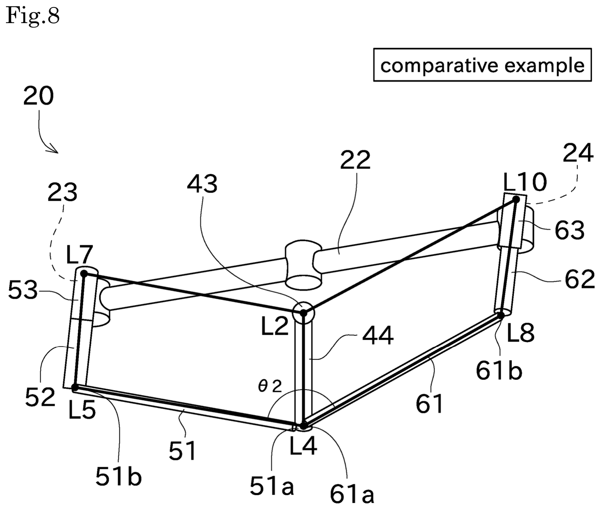

The reason why a force that weakens the self-steer is generated in the layout of the comparative example will be described with reference to FIGS. 7 and 8. FIGS. 7 and 8 are schematic diagrams showing a state in which the lean vehicle 1 of the comparative example is leaned to the right while a handlebar operation is maintained in a straight-ahead state. In the layout of the comparative example, due to a mechanical reason, an opening angle θ2 between the left rod 51 and the right rod 61 becomes smaller in a lean state than in an upright state. In addition, a quadrangle formed by the second steering axis L2, the central vertical axis L4, the left vertical axis L5, and the left front wheel pivot axis L7 becomes a trapezoid when viewed in a direction of the second steering axis L2 as shown in FIG. 8, and a quadrangle formed by the second steering axis L2, the central vertical axis L4, the right vertical axis L8, and the right front wheel pivot axis L10 also becomes a trapezoid. Therefore, since a movement like a parallel link cannot be realized, it becomes difficult for the rod coupling 45, the left rod 51, and the right coupling part 62 to move freely. As a result, the respective parts cannot move in a direction caused by the self-steer, and a force that weakens the self-steer is generated due to an influence of the opening angle θ2 between the left rod 51 and the right rod 61.

In contrast, in the layout of the first embodiment, a force that weakens the self-steer is unlikely to be generated during a turn for reasons described below. Therefore, a force that counteracts the restoring force is unlikely to be generated. As a result, stability of the vehicle at the start of travel or at a low speed is unlikely to be reduced.

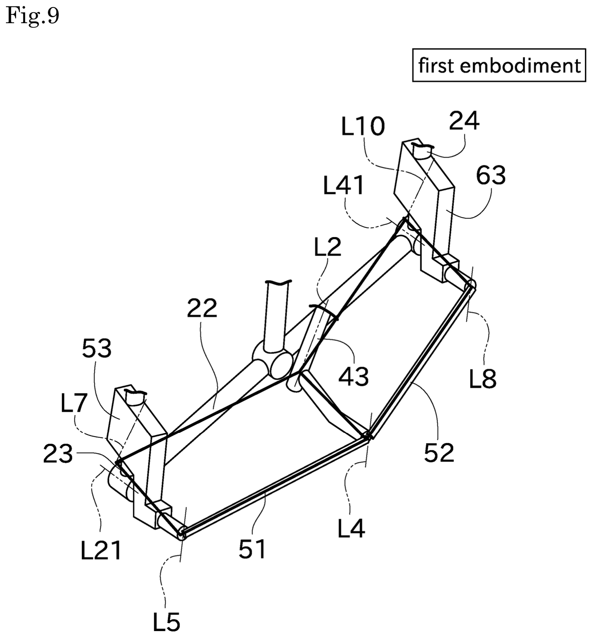

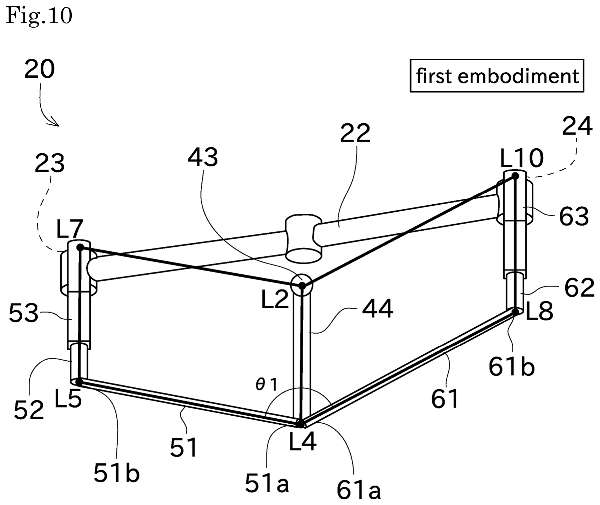

The reason why a force that weakens the self-steer is unlikely to be generated in the layout of the first embodiment will be described with reference to FIGS. 9 and 10. FIGS. 9 and 10 are schematic diagrams showing a state in which the lean vehicle 1 of the first embodiment is leaned to the right while a handlebar operation is maintained in a straight-ahead state. In the layout of the first embodiment, unlike the comparative example, an angle θ1 formed between the left rod 51 and the right rod 61 in a plane including the respective rods is the same before and after leaning as in an upright state. Before and after steering, the angle θ1 formed between the left rod 51 and the right rod 61 in a plane including the left and right rods 51 and 61 is the same as in the upright state. In addition, a quadrangle formed by the second steering axis L2, the central vertical axis L4, the left vertical axis L5, and the left front wheel pivot axis L7 becomes a parallelogram, and a quadrangle formed by the second steering axis L2, the central vertical axis L4, the right vertical axis L8, and the right front wheel pivot axis L10 also becomes a parallelogram.

Specifically, a distance from the second steering axis L2 to the left front wheel pivot axis L7 in a virtual plane through which the left and right rods 51 and 61 pass is equal to a length of the left rod 51 (a distance from the central vertical axis L4 to the left front-rear axis L6). A distance from the second steering axis L2 to the right front wheel pivot axis L10 is equal to a length of the right rod 61 (a distance from the central vertical axis L4 to the right front-rear axis L9). A distance from the second steering axis L2 to the central vertical axis L4 is equal to a distance from the left front wheel pivot axis L7 to the left front-rear axis L6. A distance from the second steering axis L2 to the central vertical axis L4 is equal to a distance from the right front wheel pivot axis L10 to the distal end 61b. In addition, respective lengths of the left and right rods 51 and 61 (a distance from the central vertical axis L4 to the left vertical axis L5 and a distance from the central vertical axis L4 to the right vertical axis L8) are equal to each other. In addition, a distance from the left vertical axis L5 to the left front wheel pivot axis L7 and a distance from the right vertical axis L8 to the right front wheel pivot axis L10 are equal to each other.

As described above, in the layout of the present embodiment, the left and right rods 51 and 61 are configured as a parallel link as viewed from a direction in which the central vertical axis L4 extends. This allows a force applied to the respective rods 51 and 61 before and after leaning or before and after steering to be resolved by deformation, and prevents the force from being transmitted to the respective rods 51 and 61 as a bending force. Therefore, it becomes easier for the rod coupling 45, the left rod 51, and the right coupling part 62 to move freely. As a result, a force that weakens the self-steer is unlikely to be generated.

From another perspective, in the layout of the first embodiment, even when an inclination of the left arm 23 and the right arm 24 with respect to the upper and lower arms 21 and 22 occurs along with a lean, a load applied to the left and right rods 51 and 61 is resolved by the rod coupling 45 being angularly displaced about the central front-rear axis L3. This can prevent the rod coupling 45 from being angularly displaced about the second steering axis L2. As a result, a self-steering torque is likely to be maintained. This allows a force that steers the wheels to prevent the vehicle from falling at a start of travel and at a low speed to be maintained by the self-steer.

In contrast, in the layout of the comparative example shown in FIGS. 7 and 8, when leaning, a load applied to the left and right rods 51 and 61 cannot be resolved only by the rod coupling being angularly displaced about the central front-rear axis L3, and an unresolved load generates a force that causes the rod coupling 45 to be angularly displaced about the second steering axis L2. In this case, a force that steers the wheels in a direction that counteracts the self-steer is generated. As described above, the layout of the present embodiment can maintain a force that steers the wheels to prevent the vehicle from falling at a start of travel and at a low speed, as compared with the layout of the comparative example. This can enhance stability of the lean vehicle 1 at a start of travel and at a low speed.

As a result, in the first embodiment, generation of a force that counteracts the self-steer when a lean occurs is prevented, and stability of the vehicle at a start of travel or at a low speed can be enhanced as compared with the comparative example.

Note that the central front-rear axis L3, the left front-rear axis L6, and the right front-rear axis L9 only need to be parallel to each other, and when the lean vehicle 1 is in a straight-ahead state, the central front-rear axis L3, the left front-rear axis L6, and the right front-rear axis L9 may be non-parallel to the front-rear direction. Similarly, the central vertical axis L4, the left vertical axis L5, and the right vertical axis L8 only need to be parallel to each other, and when the lean vehicle 1 is in an upright state, the central vertical axis L4, the left vertical axis L5, and the right vertical axis L8 may be non-parallel to the vertical direction.

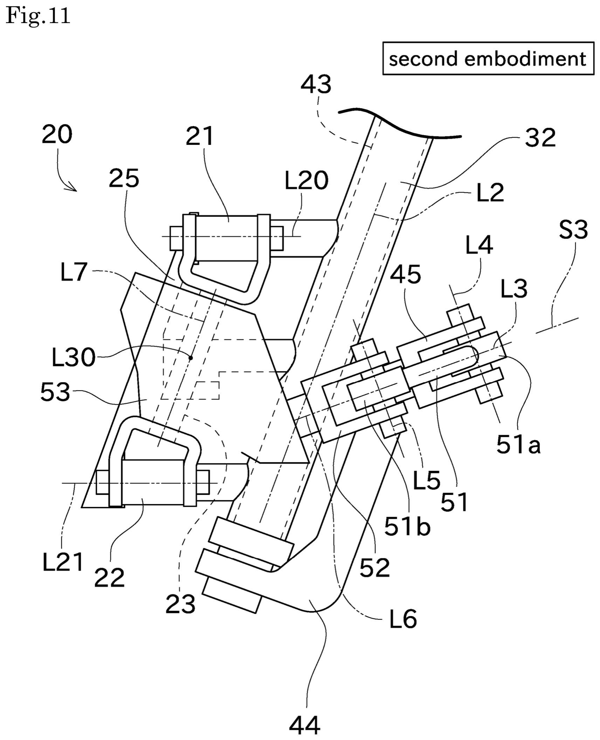

Next, a second embodiment will be described with reference to FIG. 11.

The lean vehicle 1 of the second embodiment differs from the lean vehicle 1 of the first embodiment only in the layout of the mechanism for transmitting a steering force from the steering shaft 43 to the front wheels 3. Since the only difference is the layout, a description of the configuration of each part of the lean vehicle 1 of the second embodiment is omitted.

Hereinafter, a rod arrangement plane S3 of the second embodiment will be described with reference to FIG. 11. As shown in FIG. 11, in the second embodiment, the layout is such that the rod coupling 45, the left coupling part 52, the right coupling part 62, and the like extend upward toward the rear side with respect to a horizontal plane. Therefore, the rod arrangement plane S3 of the second embodiment is a plane inclined upward toward the rear side. That is, when comparing the degree of upward inclination toward the rear side of the rod arrangement planes, the order from largest to smallest is the second embodiment, the first embodiment, and the comparative example. Accordingly, for example, when the lean vehicle 1 of the second embodiment is leaned to the right, an opening angle between the left rod 51 and the right rod 61 becomes larger than in the upright state. Therefore, a force that enhances the self-steer is generated due to an influence of the opening angle θ3 between the left rod 51 and the right rod 61.

The generation of a force that enhances the self-steer during a turn generates a force that increases a restoring force. As a result, stability at a start of travel or at a low speed can be improved.

When compared with the above-described virtual perpendicular plane, the rod arrangement plane S3 of the second embodiment shows the same relationship as the rod arrangement plane S1. That is, in front of the second steering axis L2, the rod arrangement plane S3 is located below the virtual perpendicular plane. Behind the second steering axis L2, the rod arrangement plane S3 is located above the virtual perpendicular plane.

The lean vehicle 1 of the second embodiment has the following positional relationship. That is, in a front view, a component of a direction in which the left and right rods 51 and 61 extend from vehicle-widthwise outer ends (the distal end 51b and the distal end 61b) toward the rod coupling 45 includes a direction along the second steering axis L2. In a front view and in an upright state, the vehicle-widthwise outer ends of the left and right rods 51 and 61 are located above the rod coupling 45. The left and right rods 51 and 61 are inclined to be spaced upward from a virtual plane including an axis of the lower arm 22 and an axis of the upper arm 21, as they approach from the vehicle-widthwise outer ends to vehicle-widthwise inner ends.

(Feature 1) As described above, the lean vehicle 1 of the present embodiment travels in a lean state relative to a road surface. The lean vehicle 1 comprises a seat 9, a body frame 2, a parallel link mechanism 20, a left front wheel 3a, a right front wheel 3b, a steering shaft 43, a rod coupling 45, a left rod 51, and a right rod 61. A driver is seated on the seat 9. The body frame 2 includes a seat post 10 that supports the seat 9 and extends in an up-down direction. The parallel link mechanism 20 is link-coupled to the body frame 2, includes a left arm 23, a right arm 24, an upper arm 21, and a lower arm 22, and the left arm 23 and the right arm 24 extend parallel to the seat post 10. The left front wheel 3a is supported by the left arm 23 to be angularly displaceable about a left front wheel pivot axis L7 of the left arm 23. The right front wheel 3b is supported by the right arm 24 to be angularly displaceable about a right front wheel pivot axis L10 of the right arm 24. The steering shaft 43 is supported by the body frame 2 and is angularly displaced about a second steering axis L2 in response to a steering force from the driver. The rod coupling 45 is disposed radially apart from the second steering axis L2 and is angularly displaced about the second steering axis L2 integrally with the steering shaft 43. The left rod 51 is link-coupled to the rod coupling 45 and the left front wheel 3a, and angularly displaces the left front wheel 3a about the left front wheel pivot axis L7 in accordance with an angular displacement of the steering shaft 43. The right rod 61 is link-coupled to the rod coupling 45 and the right front wheel 3b, and angularly displaces the right front wheel 3b about the right front wheel pivot axis L10 in accordance with the angular displacement of the steering shaft 43. The left front wheel pivot axis L7 and the right front wheel pivot axis L10 are both inclined to extend upward toward a rear side. An axis of the left rod 51 and an axis of the right rod 61 extend parallel to either the upper or lower arm 21 or 22, or are inclined to extend upward toward a vehicle-widthwise inner side in an upright state of the vehicle.

By inclining the left front wheel pivot axis L7 and the right front wheel pivot axis L10 upward toward the rear side, a self-steering torque that changes a steering angle toward a lean side can be generated in the left and right front wheels 3 when the lean vehicle 1 leans. Therefore, a steering operation by the driver can be assisted. In addition, since the left and right rods have the above-described orientation, it is possible to prevent a force in a direction that weakens the self-steering torque from being generated in the rod coupling 45 during a lean. This can prevent suppression of the self-steering torque, so that running stability at a low speed or at a start of travel can be improved.

(Feature 2) In the lean vehicle 1 of the present embodiment, the axis of the left rod 51 and the axis of the right rod 61 extend parallel to either the upper or lower arm 21 or 22.

It is possible to prevent a relative angle change of the rod coupling with respect to the second steering axis L2, which is caused by an inclination change of the left arm 23 and the right arm 24 accompanying a lean change of the vehicle.

(Feature 3) In the lean vehicle 1 of the present embodiment, the axis of the left rod 51 and the axis of the right rod 61 are inclined to extend upward toward a vehicle-widthwise inner side in an upright state of the vehicle.

A force can be applied in the same direction as the self-steering torque due to an inclination change of the left arm 23 and the right arm 24 accompanying a lean change of the vehicle. As a result, a force that assists steering can be applied in addition to the self-steering torque. This can further improve running stability at a low speed or at a start of travel.

(Feature 4) In the lean vehicle 1 of the present embodiment, the parallel link mechanism 20 is located in front of the steering shaft 43. The rod coupling 45 is located behind the steering shaft 43.

This makes it easy to protect the left rod and the right rod from flying objects from the front by using the parallel link mechanism 20.

(Feature 5) In the lean vehicle 1 of the present embodiment, the rod coupling 45 is located above a lower end portion of the lower arm 22.

This makes it easy to protect the rod coupling, the left rod, and the right rod from flying objects from below by using the parallel link mechanism 20.

(Feature 6) In the lean vehicle 1 of the present embodiment, when viewed in a direction along the second steering axis L2, a distance from the second steering axis L2 to the left front wheel pivot axis L7 is equal to a length of the left rod 51, a distance from the second steering axis L2 to the right front wheel pivot axis L10 is equal to a length of the right rod 61, a distance from the second steering axis L2 to a proximal end 51a of the left rod 51, which is an end on a rod coupling side, is equal to a distance from the left front wheel pivot axis L7 to a distal end 51b of the left rod 51, which is an end on a left front wheel 3a side, and a distance from the second steering axis L2 to a proximal end 61a of the right rod 61 is equal to a distance from the right front wheel pivot axis L10 to a distal end 61b of the right rod 61.

This allows a parallel link structure to be realized by the left rod 51, the right rod 61, the left arm 23, and the right arm 24, thereby smoothing operation.

(Feature 7) In the lean vehicle 1 of the present embodiment, the rod coupling 45 is connected to a lower end portion of the steering shaft 43. A portion of the left rod 51 and the right rod 61 that is coupled to the rod coupling 45 is located closer to the lower arm than to a center position of the parallel link mechanism 20 in the up-down direction.

This makes it easy to shorten the left rod 51 and the right rod 61.

(Feature 8) In the lean vehicle 1 of the present embodiment, a link coupling structure between the left arm 23 and the left front wheel 3a, and a link coupling structure between the right arm 24 and the right front wheel 3b each include, in an upright state of the vehicle, a structure that is angularly displaceable about a vertical axis (a left vertical axis L5 and a right vertical axis L8) parallel to a vertical direction, and a a structure that is angularly displaceable about a front-rear axis (a left front-rear axis L6 and a right front-rear axis L9) parallel to a front-rear direction.

This widens a movable angle range of the left rod 51 and the right rod 61, so that rod movement can be realized.

(Feature 9) In the lean vehicle 1 of the present embodiment, a central coupling structure 71 for at least one of the left rod 51 and the right rod 61 and the rod coupling 45 includes a ball joint.

This makes it easy to operate the rods while suppressing an influence of assembly errors and the like.

(Feature 10) The lean vehicle 1 of the present embodiment comprises a handlebar shaft 41, a steering mechanism 6, and an accommodation section 90. The handlebar shaft 41 is angularly displaced coaxially with a steering handlebar 5. The steering mechanism 6 transmits a steering force transmitted to the handlebar shaft 41 to the steering shaft 43. The accommodation section 90 is disposed, in a side view, in a range including between an axial position of the handlebar shaft 41 and an axial position of the steering shaft 43, and accommodates a load 100.

In this type of lean vehicle 1, since the accommodation section 90 is relatively large, a load accommodated in the accommodation section 90 tends to be heavy. Therefore, stability at a low speed is more important, and the effect of the present application can be effectively utilized.

(Feature 11) This feature is obtained by excluding from Feature 1 the configuration that "the left rod 51 and the right rod 61 each extend parallel to the upper arm 21," and adding the feature that "a rod arrangement plane S1, S3, which is a virtual plane that overlaps the rod coupling 45 and through which an axis of the left rod 51 and an axis of the right rod 61 pass, is an inclined plane that is inclined to extend upward toward the rear side in an upright state of the vehicle."

(Other Features) This feature is obtained by excluding from Feature 1 the configuration that "the left rod 51 and the right rod 61 each extend parallel to the upper arm 21," and adding the feature that "when a rod arrangement plane is defined as a virtual plane that overlaps the rod coupling and through which an axis of the left rod and an axis of the right rod pass, and a virtual perpendicular plane is defined as a plane that extends perpendicularly to the steering axis and overlaps the rod arrangement plane at the steering axis, the rod arrangement plane is located below the virtual perpendicular plane in front of the steering axis, and the rod arrangement plane is located above the virtual perpendicular plane behind the steering axis."

While preferred embodiments of the present application have been described above, the above configurations can be modified, for example, as follows. The modifications may be made alone, or a plurality of modifications may be arbitrarily combined.

The lean vehicle 1 of the present embodiment is a three-wheeled bicycle including two front wheels 3 and one rear wheel 4. Alternatively, the lean vehicle 1 may be a three-wheeled bicycle including one front wheel and two rear wheels. The total number of front and rear wheels included in the lean vehicle 1 is not limited to three, and may be two or four or more.

In the present embodiment, the left and right rods 51 and 61 are disposed behind the parallel link mechanism 20. Alternatively, the left and right rods 51 and 61 may be disposed in front of the parallel link mechanism 20. In this case, the rod coupling 45 is disposed to extend forward from a front side of the steering shaft 43. In addition, vehicle-widthwise outer ends (the distal end 51b and the distal end 61b) of the left and right rods 51 and 61 are located in front of vehicle-widthwise center ends (the proximal end 51a and the proximal end 61a).

In the present embodiment, the steering force is transmitted in the order of the handlebar shaft 41, the transmission arm 42, and the steering shaft 43. Alternatively, the handlebar shaft 41 and the steering shaft 43 may be integrated. In this case, the steering force of the driver is directly transmitted to the steering shaft 43. The state in which the handlebar shaft 41 and the steering shaft 43 are integrated is a state in which the L-shaped member 44 is coupled to a lower end of the handlebar shaft 41, and the transmission arm 42 and the second head pipe 32 are omitted. A lean vehicle having this type of steering mechanism 6 may be adopted, for example, in a type of lean vehicle 1 that is not primarily intended for carrying a load 100. The transmission arm 42 may be a single arm on either the left or right side, instead of a pair of left and right arms. A front end of the transmission arm 42 may be link-coupled to a lower end of the steering shaft 43 at a position shifted in the vehicle width direction with respect to the second steering axis L2.

Alternatively, the steering shaft 43 may be disposed behind the steering handlebar 5 and the handlebar shaft 41. In this case, the steering handlebar 5 or the handlebar shaft 41 is coupled to the steering shaft 43 via a link member, and the steering force is transmitted.

## Claims

1. A lean vehicle (1) configured to travel in a lean state relative to a road surface, the lean vehicle (1) comprising:
a seat (9) on which a driver is seated;
a body frame (2) which includes a seat post (10) that supports the seat (9) and extends in an up-down direction;
a parallel link mechanism (20) which is link-coupled to the body frame (2) and includes a left arm (23), a right arm (24), an upper arm (21), and a lower arm (22), the left arm (23) and the right arm (24) extending parallel to the seat post (10);
a left front wheel (3a) which is supported by the left arm (23) to be angularly displaceable about a left front wheel pivot axis (L7) of the left arm (23);
a right front wheel (3b) which is supported by the right arm (24) to be angularly displaceable about a right front wheel pivot axis (L10) of the right arm (24);
a steering shaft (43) which is supported by the body frame (2) and is angularly displaced about a steering axis (L2) in response to a steering force from the driver;
a rod coupling (45) which is disposed radially apart from the steering axis (L2) and is angularly displaced about the steering axis (L2) integrally with the steering shaft (43);
a left rod (51) which is link-coupled to the rod coupling (45) and the left front wheel (3a), and which angularly displaces the left front wheel (3a) about the left front wheel pivot axis (L7) in accordance with an angular displacement of the steering shaft (43); and
a right rod (61) which is link-coupled to the rod coupling (45) and the right front wheel (3b), and which angularly displaces the right front wheel (3b) about the right front wheel pivot axis (L10) in accordance with the angular displacement of the steering shaft (43),
wherein the left front wheel pivot axis (L7) and the right front wheel pivot axis (L10) are both inclined to extend upward toward a rear side, and
an axis of the left rod (51) and an axis of the right rod (61) extend parallel to either the upper arm (21) or the lower arm (22), or are inclined to extend upward toward a vehicle-widthwise inner side in an upright state of the vehicle.

2. The lean vehicle (1) according to claim 1, wherein
the axis of the left rod (51) and the axis of the right rod (61) extend parallel to either the upper arm (21) or the lower arm (22).

3. The lean vehicle (1) according to claim 1 or 2, wherein
the axis of the left rod (51) and the axis of the right rod (61) are inclined to extend upward toward the vehicle-widthwise inner side in the upright state of the vehicle.

4. The lean vehicle (1) according to any one of claims 1 to 3, wherein
the parallel link mechanism (20) is located in front of the steering shaft (43), and
the rod coupling (45) is located behind the steering shaft (43).

5. The lean vehicle (1) according to claim 2, wherein
the rod coupling (45) is located above a lower end portion of the lower arm (22).

6. The lean vehicle (1) according to any one of claims 1 to 5, wherein
when viewed in a direction along the steering axis (L2),
a distance from the steering axis (L2) to the left front wheel pivot axis (L7) is equal to a length of the left rod (51),
a distance from the steering axis (L2) to the right front wheel pivot axis (L10) is equal to a length of the right rod (61),
a distance from the steering axis (L2) to a proximal end (51a) of the left rod (51), the proximal end (51a) being an end on a side of the rod coupling (45), is equal to a distance from the left front wheel pivot axis (L7) to a distal end (51b) of the left rod (51), the distal end (51b) being an end on a side of the left front wheel (3a), and
a distance from the steering axis (L2) to a proximal end (61a) of the right rod (61) is equal to a distance from the right front wheel pivot axis (L10) to a distal end (61b) of the right rod (61).

7. The lean vehicle (1) according to claim 2, wherein
the rod coupling (45) is connected to a lower end portion of the steering shaft (43), and
a portion of the left rod (51) and the right rod (61) that is coupled to the rod coupling (45) is located closer to the lower arm (22) than to a center position of the parallel link mechanism (20) in the up-down direction.

8. The lean vehicle (1) according to claim 2, wherein
a link coupling structure between the left arm (23) and the left front wheel (3a), and a link coupling structure between the right arm (24) and the right front wheel (3b) each include, in the upright state of the vehicle, a structure that is angularly displaceable about a vertical axis (L5, L8) parallel to a vertical direction, and a structure that is angularly displaceable about a longitudinal axis (L6, L9) parallel to a front-rear direction.

9. The lean vehicle (1) according to any one of claims 1 to 8, wherein
a coupling structure between at least one of the left rod (51) and the right rod (61) and the rod coupling (45) includes a ball joint.

10. The lean vehicle (1) according to any one of claims 1 to 9, further comprising:
a handlebar shaft (41) configured to be angularly displaced coaxially with a steering handlebar (5);
a steering mechanism (6) configured to transmit the steering force transmitted to the handlebar shaft (41) to the steering shaft (43); and
an accommodation section (90) that is disposed, in a side view, in a range including between an axial position of the handlebar shaft (41) and an axial position of the steering shaft (43), and that accommodates a load (100).

11. A lean vehicle (1) configured to travel in a lean state relative to a road surface, the lean vehicle (1) comprising:
a seat (9) on which a driver is seated;
a body frame (2) which includes a seat post (10) that supports the seat (9) and extends in an up-down direction;
a parallel link mechanism (20) which is link-coupled to the body frame (2) and includes a left arm (23), a right arm (24), an upper arm (21), and a lower arm (22), the left arm (23) and the right arm (24) extending parallel to the seat post (10);
a left front wheel (3a) which is supported by the left arm (23) to be angularly displaceable about a left front wheel pivot axis (L7) of the left arm (23);
a right front wheel (3b) which is supported by the right arm (24) to be angularly displaceable about a right front wheel pivot axis (L10) of the right arm (24);
a steering shaft (43) which is supported by the body frame (2) and is angularly displaced about a steering axis (L2) in response to a steering force from the driver;
a rod coupling (45) which is disposed radially apart from the steering axis (L2) and is angularly displaced about the steering axis (L2) integrally with the steering shaft (43);
a left rod (51) which is link-coupled to the rod coupling (45) and the left front wheel (3a), and which angularly displaces the left front wheel (3a) about the left front wheel pivot axis (L7) in accordance with an angular displacement of the steering shaft (43); and
a right rod (61) which is link-coupled to the rod coupling (45) and the right front wheel (3b), and which angularly displaces the right front wheel (3b) about the right front wheel pivot axis (L10) in accordance with the angular displacement of the steering shaft (43),
wherein the left front wheel pivot axis (L7) and the right front wheel pivot axis (L10) are both inclined to extend upward toward a rear side, and
a rod arrangement plane (S1, S3), which is a virtual plane that overlaps the rod coupling (45) and through which an axis of the left rod (51) and an axis of the right rod (61) pass, is an inclined plane that is inclined to extend upward toward the rear side in an upright state of the vehicle.
